# EUROPÄISCHE PATENTSCHRIFT

(11) **EP 3 927 558 B1**
(45) Veröffentlichungstag und Bekanntmachung des Hinweises auf die Patenterteilung: **04.09.2024**
(21) Anmeldenummer: 20706204.3
(22) Anmeldetag: 18.02.2020
(51) Int. Cl.: B42D 25/328, B42D 25/346, B42D 25/351, B42D 25/45

(54) **VERFAHREN ZUR HERSTELLUNG EINES WERT-ODER SICHERHEITSDOKUMENTES SOWIE SICHERHEITSDOKUMENT MIT EINEM SICHERHEITSHOLOGRAMM**
METHOD FOR PRODUCING A VALUE OR SECURITY DOCUMENT, AND SECURITY DOCUMENT COMPRISING A SECURITY HOLOGRAM
PROCÉDÉ DE FABRICATION D'UN DOCUMENT DE VALEUR OU DE SÉCURITÉ AINSI QUE DOCUMENT DE SÉCURITÉ POURVU D'UN HOLOGRAMME DE SÉCURITÉ

(30) Priorität: 21.02.2019 DE 102019104380
(43) Veröffentlichungstag der Anmeldung: 29.12.2021
(73) Patentinhaber: Bundesdruckerei GmbH, 10969 Berlin (DE)
(72) Erfinder: SPRENGER, Martin, 10317 Berlin (DE); KLÜNDER, Kathrin, 10997 Berlin (DE); GAHLBECK, Jeffrey, 15517 Berlin (DE); KUNATH, Christian, 12203 Berlin (DE)
(74) Vertreter: Mammel und Maser Patentanwälte PartG mbB
(86) Internationale Anmeldenummer: PCT/EP2020/054195
(87) Internationale Veröffentlichungsnummer: WO 2020/169576

(56) Entgegenhaltungen:
- WO-A1-2014/029686

## Beschreibung

Die Erfindung betrifft ein Verfahren zur Herstellung eines Wert- oder Sicherheitsdokumentes mit einem Sicherheitshologramm.

Aus der WO 2014/029 686 A1 ist der Oberbegriff des Anspruchs 1 oder ein Wert- oder Sicherheitsdokument bekannt, welches aus einer inneren Schicht sowie einer der Oberseite und der Unterseite der inneren Schicht zugeordneten Deckschicht umfasst. In die innere Schicht wird eine Einstanzung eingebracht. In diese Einstanzung wird ein Folienstück eingelegt. Darauffolgend werden die einzelnen Schichten miteinander laminiert.

Aus der DE 10 2014 217 099 A1 sind ein Verfahren zur Herstellung eines Sicherheitsdokumentes mit einem Sicherheitshologramm sowie ein solches Sicherheitsdokument bekannt. Dieses Sicherheitsdokument besteht aus mehreren Substratschichten, insbesondere aus Kunststoffschichten, welche in einem Laminationsverfahren miteinander verbunden sind. Zwischen diesen Schichten wird ein Sicherheitshologramm appliziert. Hierzu können beispielsweise Haftvermittler oder Kleber eingesetzt werden. Das Sicherheitsdokument ist vorzugsweise derart ausgebildet, dass dieses zumindest in einem Bereich ein Fenster aufweist, in welchem der durch die Substratschichten gebildete Dokumentenkörper für Licht einer Wellenlänge zwischen einer Oberseite und einer Unterseite des Dokumentenkörpers transparent ist. Diesem Fenster ist ein Sicherheitshologramm, insbesondere ein Transmissionshologramm, zugeordnet, wobei das Transmissionshologramm in einer separaten Substratschicht vorgesehen ist, welches sich zwischen zumindest einer oberen und zumindest einer unteren Substratschicht zur Bildung des Dokumentenkörpers vollflächig erstreckt.

Alternativ ist aus der DE 10 2014 217 099 A1 ein Sicherheitsdokument bekannt, bei welchem in zumindest einer oberen Substratschicht oder zumindest einer unteren Substratschicht ein Fensterabschnitt vorgesehen ist und dieser Fensterabschnitt für Licht einer Wellenlänge durchlässig ist. Diesem Fensterabschnitt ist ein Reflexionshologramm zugeordnet, welches in einer separaten durchgehenden Schicht zwischen der zumindest einen oberen Substratschicht und der zumindest einen unteren Substratschicht enthalten ist. Bei einer Beleuchtung auf den Fensterabschnitt kann das Reflexionshologramm verifiziert werden.

Der Erfindung liegt die Aufgabe zugrunde, ein Verfahren zur Herstellung eines Wert- oder Sicherheitsdokumentes mit einem Sicherheitshologramm sowie ein Wert- oder Sicherheitsdokument mit einem Sicherheitshologramm vorzuschlagen, bei welchem eine Reduzierung der Anzahl der Schichten für einen Dokumentenkörper und gleichzeitig eine sichere Einbindung eines Sicherheitshologrammes ermöglicht werden.

Diese Aufgabe wird durch ein Verfahren zur Herstellung eines Wert- oder Sicherheitsdokumentes gelöst, bei dem in eine zumindest innenliegende Schicht eines Dokumentenkörpers zumindest eine Ausstanzung mit einem Stanzwerkzeug eingebracht und darauffolgend ein Bahnmaterial mit zumindest einem Sicherheitshologramm bereitgestellt wird, wobei mit einem Stanzwerkzeug ein Sicherheitshologramm mit einem Format aus dem Bahnmaterial ausgestanzt wird, welches der Größe der Ausstanzung der innenliegenden Schicht entspricht und das ausgestanzte Format des Sicherheitshologramms in die Ausstanzung der zumindest einen innenliegenden Schicht eingesetzt wird und darauffolgend die zumindest eine innenliegende Schicht mit dem in der Ausstanzung aufgenommenen Sicherheitshologramm der zumindest einen oberen und/oder zumindest einen unteren Schicht zur weiteren Herstellung des Dokumentenkörpers zugeführt wird. Dieses Verfahren weist den Vorteil auf, dass das Sicherheitshologramm in die zumindest eine innenliegende Schicht integriert werden kann und darauffolgend mit zumindest einer oberen und/oder zumindest einer unteren Schicht zu einem Dokumentenkörper verbunden wird. Dadurch kann eine sichere Einbettung des Sicherheitshologramms erfolgen. Gleichzeitig kann ein vollständig fertiggestelltes Sicherheitshologramm in den Herstellungsprozess des Wert- oder Sicherheitsdokumentes integriert und in die Ausstanzung eingesetzt werden. Durch die Anordnung des ausgestanzten Sicherheitshologrammes in die Ausstanzung der zumindest einen innenliegende Schicht kann eine zusätzliche Substratschicht, welche das Sicherheitshologramm umfasst, entfallen.

Des Weiteren ist vorgesehen, dass das Sicherheitshologramm aufgrund des gleichen Formats wie die Ausstanzung in der zumindest einen innenliegenden Schicht nach dem Einsetzen in diese Ausstanzung darin gehalten wird und darauffolgend die zumindest eine innenliegende Seite mit dem in der Ausstanzung gehaltenen Sicherheitshologramm der zumindest einen oberen und/oder zumindest einen unteren Schicht zum darauffolgenden Laminieren zugeführt wird. Durch die Stanzung der Sicherheitshologramms als auch die Herstellung der Ausstanzung in der zumindest einen innenliegenden Schicht mit demselben Format bzw. denselben Abmessungen wird ermöglicht, dass mittels dem Stanzwerkzeug und/oder Gegenwerkzeug das Sicherheitshologramm in der Ausstanzung der zumindest einen innenliegenden Schicht positioniert und auch darin gehalten wird. Dabei kann es zu einem geringfügigen Verhaken kommen, so dass das Sicherheitshologramm ohne zusätzliche Mittel selbsthaltend in der Ausstanzung gehalten wird. Darauffolgend kann die zumindest eine innenliegende Schicht mit dem in der Ausstanzung gehaltenen Sicherheitshologramm zumindest einer oberen und/oder zumindest einer unteren Schicht für einen nachfolgenden Laminierprozess zugeführt werden ohne weitere Maßnahmen, um ein Herausfallen des Sicherheitshologramms aus der Ausstanzung der zumindest einen inneren Schicht zu verhindern.

Bevorzugt werden die innenliegende Schicht mit dem in der Ausstanzung eingesetzten Sicherheitshologramm und die zumindest eine obere Schicht und zumindest eine untere Schicht zusammengeführt und zu einem Dokumentenkörper laminiert. Dadurch kann eine sichere Einbindung des Sicherheitshologramms in den Dokumentenkörper erfolgen, der aufgrund der Lamination vorzugsweise eine stoffschlüssige Verbindung zwischen den einzelnen Schichten aufweist.

Eine bevorzugte Ausgestaltung des Verfahrens sieht vor, dass die Ausstanzung in die zumindest eine innenliegende Schicht mit demselben Stanzwerkzeug wie die Stanzung des Formats des Sicherheitshologrammes durchgeführt wird oder dass das Format des Sicherheitshologramms mit einem weiteren Stanzwerkzeug ausgestanzt wird, welches dasselbe Format wie das für die Ausstanzung aufweist. Bei der ersten Variante kann ein und dasselbe Stanzwerkzeug zur Herstellung der Ausstanzung als auch zur Stanzung des Sicherheitshologramms auf das Format erfolgen, wodurch eine besonders präzise Positionierung und Ausrichtung des Sicherheitshologramms in der Ausstanzung ermöglicht wird. Bei der zweiten Alternative kann eine höhere Taktzeit bei der Herstellung erzielt werden.

Des Weiteren werden bevorzugt zumindest eine obere und/oder untere Schicht mit einem transparenten Bereich für das Fenster oder den Fensterabschnitt ausgebildet. In einem solchen Fall kann außerhalb des Fensterabschnitts ein Blick auf die zumindest eine innenliegende Schicht verhindert sein, sodass darin weitere Sicherheitsmerkmale verborgen sein können, die von außen nicht sichtbar sind.

Alternativ kann die zumindest eine obere und/oder zumindest eine untere Schicht als transparente Schicht ausgebildet werden.

Eine weitere bevorzugte Ausgestaltung des Verfahrens sieht vor, dass in das Fenster oder den Fensterabschnitt der zumindest einen oberen und/oder zumindest einen unteren Schicht vor dem Verbinden mit der zumindest einen innenliegenden Schicht ein weiteres Sicherheitsmerkmal eingebracht wird. Beispielsweise kann in das Fenster oder den Fensterabschnitt ein weiteres Hologramm eingebracht sein, sodass zwei übereinanderliegende Hologramme in verschiedenen Schichten möglich sind.

Des Weiteren wird bevorzugt bei einem Dokumentenkörper mit einem von der Oberseite bis zur Unterseite für Licht durchlässigen Fenster ein Transmissionshologramm als Sicherheitshologramm eingebracht. Dadurch kann in einem transparenten Fenster für Durchlicht ein Sicherheitshologramm geschützt in dem Dokumentenkörper vorgesehen sein.

Alternativ kann bei einem transparenten Fensterabschnitt in der zumindest einen oberen oder der zumindest einen unteren Schicht ein Reflexionshologramm in die zumindest eine innenliegende Schicht eingebracht werden.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine perspektivische Darstellung einer ersten Ausführungsform eines Wert- oder Sicherheitsdokumentes mit einem Sicherheitshologramm,
Figur 2 eine perspektivische Ansicht einer alternativen Ausführungsform des Wert- oder Sicherheitsdokumentes gemäß Figur 1,
Figur 3 eine schematische Ansicht eines ersten Verfahrensschritts zur Herstellung des Wert- oder Sicherheitsdokumentes gemäß Figur 1,
Figur 4 eine perspektivische Ansicht eines weiteren Verfahrensschritts zur Herstellung des Wert- oder Sicherheitsdokumentes gemäß Figur 1, und
Figur 5 eine perspektivische Ansicht eines weiteren Verfahrensschritts zur Herstellung des Wert- oder Sicherheitsdokumentes gemäß Figur 1.

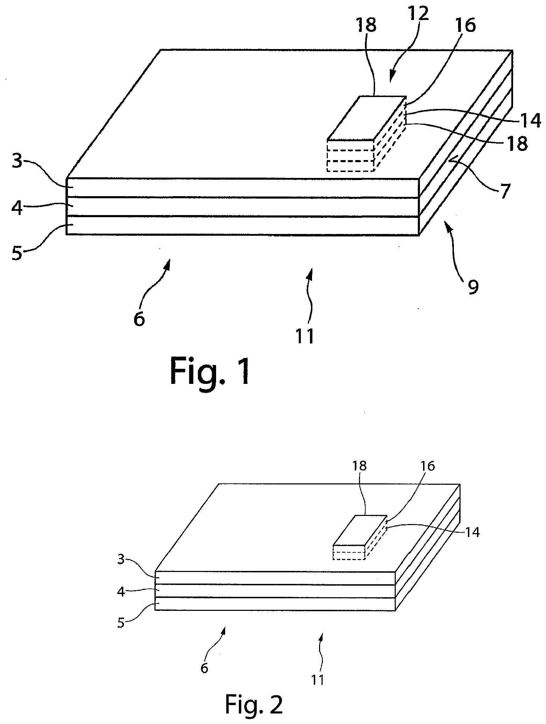

In Figur 1 ist perspektivisch eine erste Ausführungsform eines Wert- oder Sicherheitsdokumentes 11 dargestellt. Dieses Wert- oder Sicherheitsdokument 11 besteht aus zumindest einer oberen Schicht 3 und zumindest einer unteren Schicht 5. Dazwischenliegend ist zumindest eine innenliegende Schicht 4 vorgesehen. Die Schichten 3, 4 und 5 können aus einer einzelnen Schicht oder auch aus mehreren Schichten ausgebildet sein. Diese mehreren Schichten können ein Folienheft bilden. Diese Schichten 3, 4, 5 werden durch Lamination miteinander zu einem Dokumentenkörper 6 verbunden. Dieser Dokumentenkörper 6 kann durch einen Schneid- oder Stanzprozess auf ein Endformat mit einer Außenkontur 9 geschnitten sein, sodass die obere, mittlere und untere Schichten 3, 4, 5 eine gemeinsam umlaufende Stirnfläche 2 aufweisen. Diese liegen bevorzugt in einer gemeinsamen Ebene.

Die Schichten 3, 4, 5 zur Herstellung des Dokumentenkörpers können aus einem oder mehreren Materialien aus Kunststoff bestehen. Insbesondere umfassen diese Polycarbonat (PC) oder bestehen aus PC. Weitere Alternativen können sein: Bisphenol-A-Polycarbonat, Carboxy-modifiziertes PC, Polyethylenterephthalat (PET), dessen Derivaten wie Glycolmodifiziertem PET (PETG), Polyvinylchlorid (PVC), Polyvinylbutyral (PVB), Polymethylmethacrylat (PMMA), Polyimid (PI), Polybutylenterephthalat (PBT), Polyvinylalkohol (PVA), Polystyrol (PS), Polyvinylphenol (PVP), Polypropylen (PP), Polyethylen (PE), thermoplastischen Elastomeren (TPE), insbesondere thermoplastisches Polyurethan (TPU), Acrylnitril-Butadien-Styrol-Copolymer (ABS), und/oder deren Derivaten. Die Schichten 3, 5 können auch aus Papier und/oder Pappe oder aus Mischungen der vorgenannten Materialien bestehen. Die zumindest eine innenliegende Schicht 4 kann auch aus einem Papier, Pappe oder aus einer Mischung der vorgenannten Materialien abweichend zu den äußeren Schichten 3, 5 bestehen.

Im Wert- oder Sicherheitsdokument 11 ist ein Fenster 12 vorgesehen. In der zumindest einen oberen und zumindest einen unteren Schicht 3, 5 sind bevorzugt deckungsgleich jeweils Fensterabschnitte 18 vorgesehen, die für Licht einer Wellenlänge durchlässig sind. Insbesondere ist dieser Bereich des Fensters 12 transparent ausgebildet. Die zumindest eine innenliegende Schicht 4 weist im Bereich des Fensters 12 eine Ausstanzung 14 auf. In diese Ausstanzung 14 ist ein Sicherheitshologramm 16 eingesetzt, welches auf ein Format gestanzt ist, welches dem der Ausstanzung 14 entspricht. Dieses Sicherheitshologramm 16 ist nach dem Herstellen des Dokumentenkörpers 6 durch Lamination sicher eingebunden. Bevorzugt ist das Sicherheitshologramm 16 als ein Volumentransmissionshologramm ausgebildet. Ein solches Volumentransmissionshologramm ist aus der DE 10 2014 217 099 A1 bekannt.

Der Bereich der zumindest einen oberen und zumindest einen unteren Schicht 3, 5 um das Fenster 12 herum kann nicht-transparent ausgebildet sein. Alternativ kann auch die zumindest eine obere Schicht 3 und/oder die zumindest eine untere Schicht 5 durchgehend transparent sein. In Abhängigkeit der vorgesehenen Einsatzfälle dieses Wert- oder Sicherheitsdokumentes 11 können Informationen des Dokumenteninhabers auf die innenliegende Schicht 4, auf die zumindest eine obere und/oder zumindest eine untere Schicht 5 aufgebracht sein oder auch nur teilweise aufgebracht sein, sodass diese bei einer Ansicht auf den Dokumentenkörper 6 diese teilweisen Informationen in jeder Schicht als eine gemeinsame Information dienen.

In Figur 2 ist eine alternative Ausführungsform des Wert- oder Sicherheitsdokuments 11 zu Figur 1 dargestellt. Diese Ausführungsform unterscheidet sich dahingehend, dass nur in die zumindest eine obere Schicht 3 ein Fensterabschnitt 18 eingebracht ist. Alternativ kann dieser Fensterabschnitt 18 auch nur in der zumindest einen unteren Schicht 5 vorgesehen sein. In der zumindest einen innenliegenden Schicht 4 ist dem Fensterabschnitt 18 die Ausstanzung 14 zugeordnet. In dieser Ausstanzung 14 ist das Sicherheitshologramm 16 eingebracht. Bei dieser Ausführungsform ist das Sicherheitshologramm 16 als ein Reflexionshologramm ausgebildet. Im Übrigen entspricht der Aufbau des Wert- oder Sicherheitsdokuments 11 in Figur 2 dem in Figur 1 beschriebenen Wert- oder Sicherheitsdokument 11 sowie den alternativen Ausführungsformen.

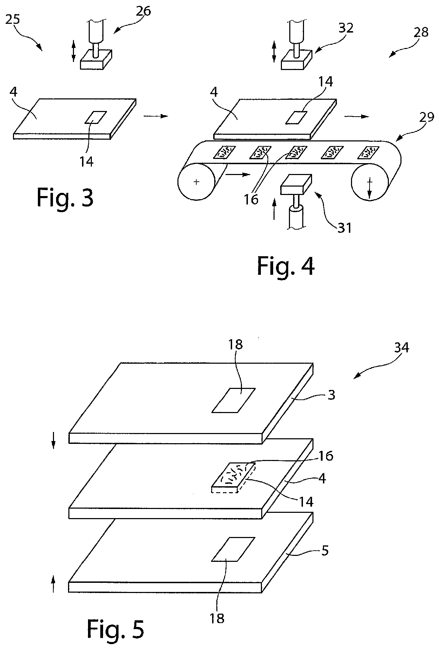

In den Figuren 3, 4 und 5 sind schematisch einzelne Verfahrensschritte zur Herstellung des Wert- oder Sicherheitsdokuments 11 gemäß Figur 1 dargestellt. In einem Arbeitsschritt wird die zumindest eine innenliegende Schicht 4 bereitgestellt und einer Stanzbearbeitungsstation 25 zugeführt. Die zumindest eine innenliegende Schicht 4 kann als Bogenware oder Bahnmaterial bereitgestellt sein. Ein Stanzwerkzeug 26 wird auf die zumindest eine innenliegende Schicht 4 zugeführt und die Ausstanzung 14 eingebracht. Darauffolgend wird die zumindest eine innenliegende Schicht 4 mit der Ausstanzung 14 einer weiteren Bearbeitungsstation 28 zugeführt. Beispielsweise ist unterhalb der zumindest einen innenliegenden Schicht 4 ein Bahnmaterial als Rollenware 29 dargestellt, welche mehrere fertiggestellte Sicherheitshologramme 16 umfasst. Mit einem Stanzwerkzeug 31 wird das Sicherheitshologramm 16 auf ein Format aus dem Bahnmaterial ausgestanzt. Dieses Format entspricht der Größe der Ausstanzung 14 in der zumindest einen innenliegenden Schicht 4. Das ausgestanzte Sicherheitshologramm 16 wird in die Ausstanzung 14 eingesetzt. Erfindungsgemäß ist dem Stanzwerkzeug 31 gegenüberliegend ein Gegenwerkzeug 32 vorgesehen. Dadurch wird das Sicherheitsmerkmal 16 bündig in die Ausstanzung 14 der zumindest einen innenliegenden Schicht 4 eingesetzt.

In einem darauffolgenden Arbeitsschritt gemäß Figur 5 wird die zumindest eine innenliegende Schicht 4 mit dem in die Ausstanzung 14 eingesetzten Sicherheitshologramm 16 einer weiteren Bearbeitungsstation 34 zugeführt. In dieser Bearbeitungsstation 34 werden die zumindest eine obere Schicht 3 oder die zumindest eine untere Schicht 5 oder beide ebenfalls zugeführt, sodass darauffolgend eine Lamination zum Dokumentenkörper 6 gemäß Figur 1 erfolgen kann.

Die zumindest eine obere Schicht 3 und zumindest eine untere Schicht 5 können bereits auf ein Format geschnitten sein, welches der zumindest einen innenliegenden Schicht 4 entspricht, um somit in einem Stapel zum Dokumentenkörper 6 laminiert zu werden. Alternativ kann die zumindest eine obere Schicht 3 und die zumindest eine untere Schicht 5 auch als Bahnmaterial auf eine Rolle bereitgestellt werden, sodass diese zumindest eine innenliegende Schicht 4 dazwischen positioniert wird. Darauffolgend wird die Lamination durchgeführt und anschließend der Dokumentenkörper 6 in der gewünschten Größe ausgestanzt.

Die Herstellung der alternativen Ausführungsform des Wert- oder Sicherheitsdokuments 11 gemäß Figur 2 erfolgt analog der vorbeschriebenen Verfahrensschritte. Dabei ist abweichend beispielsweise zumindest eine untere Schicht 5 ohne Fensterabschnitt 18 ausgebildet, und es wird als Sicherheitshologramm ein Reflexionshologramm eingesetzt.

Dieses Wert- oder Sicherheitsdokument 11 kann als kartenförmiges Dokument beispielsweise in einem ID-1-, ID-2- oder ID-3-Format ausgebildet sein. Ein solches Wert- oder Sicherheitsdokument 11 kann auch ein Personalausweis, Führerschein, Visum, Scheck-/Kreditkarte, Firmenausweis, Berechtigungsnachweis, Mitgliedsausweis, Gutschein oder dergleichen sein.

### Bezugszeichenliste

**Tabelle 2**

| | | | |
|---|---|---|---|
| 3. | Obere Schicht | 16. | Sicherheitshologramm |
| 4. | Innenliegende Schicht | 18. | Fensterabschnitt |
| 5. | Untere Schicht | 25. | Stanzbearbeitungsstation |
| 6. | Dokumentenkörper | 26. | Stanzwerkzeug |
| 7. | Stirnfläche | 28. | Bearbeitungsstation |
| 9. | Außenkontur | 29. | Rollenware |
| 11. | Wert- oder Sicherheitsdokument | 31. | Stanzwerkzeug |
| 12. | Fenster | 32. | Gegenwerkzeug |
| 14. | Ausstanzung | 34. | Weitere Bearbeitungsstation |

## Patentansprüche

1. Verfahren zur Herstellung eines Wert- oder Sicherheitsdokumentes (11),
- bei dem zumindest eine obere Schicht (3) und zumindest eine untere Schicht (5) zu einem Dokumentenkörper (6) miteinander verbunden werden,
- bei dem die zumindest eine obere Schicht (3) eine Oberseite und die zumindest eine untere Schicht (5) eine Unterseite des Dokumentenkörpers (6) bildet,
- bei dem in dem Dokumentenkörper (6) ein Fenster (12) eingebracht wird, in dem der Dokumentenkörper (6) für Licht in einer Wellenlänge zwischen der Oberseite und der Unterseite transparent ist oder bei dem ein Fensterabschnitt (18) in die zumindest eine obere oder zumindest eine untere Schicht (3, 5) eingebracht wird,
- bei dem dem Fenster (12) oder dem Fensterabschnitt (18) zugeordnet zwischen der Oberseite und der Unterseite des Dokumentenkörpers (6) ein Sicherheitshologramm (16) positioniert wird,
- bei dem in zumindest eine innenliegende Schicht (4), die zwischen der zumindest einen oberen und zumindest einen unteren Schicht (3, 5) im Dokumentkörper (6) angeordnet ist, zumindest eine Ausstanzung (14) eingebracht wird,
- bei dem ein Bahnmaterial mit mehreren aufeinanderfolgenden Sicherheitshologrammen (16) bereitgestellt wird,
- bei dem mit einem Stanzwerkzeug (26, 32) ein Sicherheitshologramm (16) mit einem Format ausgestanzt wird, welches der Größe der Ausstanzung (14) der zumindest einen innenliegenden Schicht (4) entspricht,
- bei dem die zumindest eine innenliegende Schicht (4) mit dem in der Ausstanzung (14) aufgenommenen Sicherheitshologramm (16) der zumindest einen oberen und/oder der zumindest einen unteren Schicht (3, 5) zugeführt wird,
**dadurch gekennzeichnet,**
**dass** das ausgestanzte Format des Sicherheitshologramms (16) mit dem Stanzwerkzeug (31) in die Ausstanzung (14) der zumindest einen innenliegenden Schicht (4) und mit einem dem Stanzwerkzeug (31) gegenüberliegenden Gegenwerkzeug (32) bündig in die Ausstanzung (14) eingesetzt wird, und
**dass** das Sicherheitshologramm (16) aufgrund des gleichen Formats wie die Ausstanzung (14) in der zumindest einen innenliegenden Schicht (4) nach dem Einsetzen in die Ausstanzung (14) darin gehalten wird und darauffolgend die zumindest eine innenliegende Schicht (4) mit dem in der Ausstanzung (14) gehaltenen Sicherheitshologramm (16) der zumindest einen oberen und/oder der zumindest einen unteren Schicht (3, 5) zum Laminieren zugeführt wird

2. Verfahren nach Anspruch 1, **dadurch gekennzeichnet, dass** die zumindest eine innenliegende Schicht (3) mit dem in der Ausstanzung (14) eingesetzten Sicherheitshologramm (16) und die zumindest eine obere Schicht (3) und die zumindest eine untere Schicht (5) zusammengeführt und miteinander laminiert werden.

3. Verfahren nach Anspruch 1 oder 2, **dadurch gekennzeichnet, dass** die Ausstanzung (14) in die zumindest eine innenliegende Schicht (4) mit demselben Stanzwerkzeug (26; 32) wie die Stanzung (14) des Formats des Sicherheitshologrammes (16) durchgeführt wird oder dass die Stanzung des Formats des Sicherheitshologramms (16) mit einem Stanzwerkzeug (32) durchgeführt wird, welches dem Format des Stanzwerkzeuges (26) zur Herstellung der Ausstanzung (14) in der zumindest einen innenliegenden Schicht (4) entspricht.

4. Verfahren nach einem der vorhergehenden Ansprüche, **dadurch gekennzeichnet, dass** die zumindest eine obere und/oder zumindest eine untere Schicht (3, 5) mit einem transparenten Bereich für den Fensterabschnitt (18) ausgebildet werden.

5. Verfahren nach einem der Ansprüche 1 bis 3, **dadurch gekennzeichnet, dass** die zumindest eine obere und/oder zumindest eine untere Schicht (3, 5) als transparente Schicht ausgebildet werden.

6. Verfahren nach einem der vorhergehenden Ansprüche, **dadurch gekennzeichnet, dass** in den Fensterabschnitt (12) der zumindest einen oberen und/oder zumindest einen unteren Schicht (3, 5) vor dem Verbinden mit der zumindest einen innenliegenden Schicht (4) ein weiteres Sicherheitsmerkmal eingebracht wird.

7. Verfahren nach einem der vorhergehenden Ansprüche, **dadurch gekennzeichnet, dass** bei einem Dokumentenkörper (6) mit einem von der Oberseite zur Unterseite für Licht durchlässigen Fensterabschnitt (18) zur Bildung des Fensters (12) ein Transmissionshologramm als Sicherheitshologramm (16) eingebracht wird.

8. Verfahren nach einem der Ansprüche 1 bis 6, **dadurch gekennzeichnet, dass** bei dem einem transparenten Fensterabschnitt (18) in der zumindest einen oberen oder zumindest in der einen unteren Schicht (3, 5) ein Reflexionshologramm als Sicherheitshologramm (16) in die Ausstanzung (14) der zumindest einen innenliegenden Schicht (4) eingebracht wird.

## Claims

1. Method for producing a value or security document (11),
- in which at least one upper layer (3) and at least one lower layer (5) are joined together to form a document body (6),
- in which the at least one upper layer (3) forms an upper side and the at least one lower layer (5) forms a lower side of the document body (6),
- in which a window (12) is introduced into the document body (6), in which the document body (6) is transparent to light at a wavelength between the upper side and the lower side, or in which a window section (18) is introduced into the at least one upper or at least one lower layer (3, 5),
- in which a security hologram (16) is positioned associated with the window (12) or the window section (18) between the upper side and the lower side of the document body (6),
- in which at least one punch-out (14) is made in at least one inner layer (4), which is arranged between the at least one upper and at least one lower layer (3, 5) in the document body (6),
- in which a web material with a plurality of successive security holograms (16) is provided,
- in which a punching tool (26, 32) is used to punch out a security hologram (16) with a format which corresponds to the size of the punched-out portion (14) of the at least one inner layer (4),
- in which the at least one inner layer (4) with the security hologram (16) received in the punched-out portion (14) is fed to the at least one upper and/or the at least one lower layer (3, 5), **characterized in that**
**in that** the punched-out format of the security hologram (16) is inserted into the punched-out portion (14) of the at least one inner layer (4) with the punching tool (31) and flush into the punched-out portion (14) with a mating tool (32) opposite the punching tool (31), and
**in that** the security hologram (16) is held in the at least one inner layer (4) after insertion into the punched-out portion (14) due to the same format as the punched-out portion (14) in the at least one inner layer (4), and subsequently the at least one inner layer (4) with the security hologram (16) held in the punched-out portion (14) is fed to the at least one upper and/or the at least one lower layer (3, 5) for lamination

2. Method according to claim 1, **characterized in that** the at least one inner layer (3) with the security hologram (16) inserted in the punch-out (14) and the at least one upper layer (3) and the at least one lower layer (5) are brought together and laminated together.

3. Method according to claim 1 or 2, **characterized in that** the punching out (14) in the at least one inner layer (4) is carried out with the same punching tool (26; 32) as the punching out (14) of the format of the security hologram (16) or that the punching out of the format of the security hologram (16) is carried out with a punching tool (32) which corresponds to the format of the punching tool (26) for producing the punching out (14) in the at least one inner layer (4).

4. Method according to one of the preceding claims, **characterized in that** the at least one upper and/or at least one lower layer (3, 5) are formed with a transparent region for the window portion (18).

5. Method according to one of claims 1 to 3, **characterized in that** the at least one upper and/or at least one lower layer (3, 5) are formed as a transparent layer.

6. Method according to one of the preceding claims, **characterized in that** a further security feature is introduced into the window portion (12) of the at least one upper and/or at least one lower layer (3, 5) before bonding with the at least one inner layer (4) .

7. Method according to one of the preceding claims, **characterized in that** a transmission hologram is introduced as a security hologram (16) to form the window (12) in a document body (6) with a window section (18) that is transparent to light from the top side to the bottom side.

8. Method according to one of claims 1 to 6, **characterized in that**, in the one transparent window section (18) in the at least one upper or at least in the one lower layer (3, 5), a reflection hologram is introduced as a security hologram (16) into the punched-out portion (14) of the at least one inner layer (4).

## Revendications

1. Procédé de fabrication d'un document de valeur ou de sécurité (11),
- dans lequel au moins une couche supérieure (3) et au moins une couche inférieure (5) sont reliées entre elles pour former un corps de document (6),
- dans lequel la au moins une couche supérieure (3) forme une face supérieure et la au moins une couche inférieure (5) une face inférieure du corps de document (6),
- dans lequel une fenêtre (12) est ménagée dans le corps de document (6), dans lequel le corps de document (6) est transparent à la lumière dans une longueur d'onde entre la face supérieure et la face inférieure ou dans lequel une section de fenêtre (18) est ménagée dans la au moins une couche supérieure ou la au moins une couche inférieure (3, 5),
- dans lequel un hologramme de sécurité (16) est positionné entre la face supérieure et la face inférieure du corps de document (6) en association avec la fenêtre (12) ou la section de fenêtre (18),
- dans lequel au moins une découpe (14) est réalisée dans au moins une couche intérieure (4), qui est disposée entre la au moins une couche supérieure et la au moins une couche inférieure (3, 5) dans le corps de document (6),
- dans lequel un matériau en bande avec plusieurs hologrammes de sécurité (16) successifs est mis à disposition,
- dans lequel un hologramme de sécurité (16) est découpé à l'aide d'un outil de découpage (26, 32) avec un format qui correspond à la taille du découpage (14) de la au moins une couche intérieure (4),
- dans lequel la au moins une couche intérieure (4) avec l'hologramme de sécurité (16) logé dans la découpe (14) est amenée à la au moins une couche supérieure et/ou à la au moins une couche inférieure (3, 5),
**caractérisé en ce que**
**en ce que** le format estampé de l'hologramme de sécurité (16) est inséré avec l'outil d'estampage (31) dans l'estampage (14) de la au moins une couche (4) située à l'intérieur et avec un contre-outil (32) opposé à l'outil d'estampage (31) à fleur dans l'estampage (14), et
**en ce que** l'hologramme de sécurité (16), du fait de son format identique à celui de la découpe (14), est maintenu dans la au moins une couche interne (4) après son insertion dans la découpe (14), puis la au moins une couche interne (4) avec l'hologramme de sécurité (16) maintenu dans la découpe (14) est amenée à la au moins une couche supérieure et/ou à la au moins une couche inférieure (3, 5) pour être stratifiée

2. Procédé selon la revendication 1, **caractérisé en ce que** la au moins une couche intérieure (3) avec l'hologramme de sécurité (16) inséré dans la découpe (14) et la au moins une couche supérieure (3) et la au moins une couche inférieure (5) sont réunies et stratifiées ensemble.

3. Procédé selon la revendication 1 ou 2, **caractérisé en ce que** la découpe (14) dans ladite au moins une couche interne (4) est réalisée avec le même outil de découpe (26 ; 32) que la découpe (14) du format de l'hologramme de sécurité (16) ou **en ce que** la découpe du format de l'hologramme de sécurité (16) est réalisée avec un outil de découpe (32) correspondant au format de l'outil de découpe (26) pour réaliser la découpe (14) dans ladite au moins une couche interne (4).

4. Procédé selon l'une quelconque des revendications précédentes, **caractérisé en ce que** ladite au moins une couche supérieure et/ou ladite au moins une couche inférieure (3, 5) sont formées avec une zone transparente pour la portion de fenêtre (18).

5. Procédé selon l'une des revendications 1 à 3, **caractérisé en ce que** ladite au moins une couche supérieure et/ou ladite au moins une couche inférieure (3, 5) sont formées comme une couche transparente.

6. Procédé selon l'une des revendications précédentes, **caractérisé en ce qu'**une autre caractéristique de sécurité est introduite dans la portion de fenêtre (12) de ladite au moins une couche supérieure et/ou de ladite au moins une couche inférieure (3, 5) avant la liaison avec ladite au moins une couche intérieure (4).

7. Procédé selon l'une des revendications précédentes, **caractérisé en ce que**, dans le cas d'un corps de document (6) comportant une section de fenêtre (18) laissant passer la lumière de la face supérieure à la face inférieure pour former la fenêtre (12), un hologramme de transmission est inséré en tant qu'hologramme de sécurité (16).

8. Procédé selon l'une quelconque des revendications 1 à 6, **caractérisé en ce que**, pour la partie de fenêtre transparente (18), un hologramme de réflexion est introduit dans l'au moins une couche supérieure ou dans l'au moins une couche inférieure (3, 5) en tant qu'hologramme de sécurité (16) dans la découpe (14) de l'au moins une couche intérieure (4).
